# EUROPÄISCHE PATENTSCHRIFT

(11) **EP 3 566 901 B1**
(45) Veröffentlichungstag und Bekanntmachung des Hinweises auf die Patenterteilung: **08.12.2021**
(21) Anmeldenummer: 19164924.3
(22) Anmeldetag: 25.03.2019
(51) Int. Cl.: B60P 7/08

(54) **ZURRPUNKT MIT MONTAGESTELLUNG**
LASHING POINT WITH ASSEMBLY POSITION
POINT D'ANCRAGE À POSITION DE MONTAGE

(30) Priorität: 07.05.2018 DE 202018102543 U
(43) Veröffentlichungstag der Anmeldung: 13.11.2019
(73) Patentinhaber: Thiele GmbH & Co. KG, 58640 Iserlohn (DE)
(72) Erfinder: Bermejo, Enrique, 58640 Iserlohn (DE); Norpoth, Bernd, 45309 Essen (DE)
(74) Vertreter: Osterhoff, Utz

(56) Entgegenhaltungen:
- EP-A1- 3 059 119
- DE-U1-202008 008 418
- DE-U1-202014 010 190

## Beschreibung

### Zurrpunkt mit Montagestellung

Die vorliegende Erfindung betrifft einen Zurrpunkt an einer Ladefläche eines Transportfahrzeuges gemäß den Merkmalen im Oberbegriff von Anspruch 1.

Aus dem Stand der Technik ist es bekannt, zum lösbaren Befestigen von Zurrmitteln, Zurrpunkte bzw. Anschlagpunkte zu verwenden. Insbesondere bei der Befestigung von Lasten bzw. Ladungen auf einem Transportfahrzeug werden solche Zurrpunkte an oder in der Ladefläche angeordnet. Ein solches Transportfahrzeug ist in der Regel ein Auflieger eines Lastkraftwagens.

Beispielsweise ist aus der DE 20 2008 008 418 U1 ein gattungsbildender Zurrpunkt in einer Begrenzung einer Ladefläche eines Transportfahrzeuges bekannt. Der gesamte Inhalt vorbezeichneter Gebrauchsmusterschrift wird durch Referenz mit in den Offenbarungsgehalt dieses Dokumentes einbezogen.

Ein solcher Zurrpunkt ist somit in einer Ruheposition versenkt gelagert, so dass er nicht gegenüber einer Ladefläche oben oder seitlich übersteht. Das Rangieren von Ladung ist ohne Beeinflussung durch den Zurrpunkt möglich. Auch ein anwendender Monteur kann somit über die Ladefläche laufen, ohne über einen entsprechenden Zurrpunkt zu stolpern.

Wird nunmehr der Zurrpunkt zum Befestigen eines Zurrmittels gebraucht, so ist er in eine Gebrauchsposition zu bringen. Hierzu wird der Ösenkörper des Zurrpunktes aus einer Kassette herausgezogen und das Zurrmittel mit diesem gekoppelt. In der Regel wird ein Haken in den Ösenkörper eingehakt. Nachteilig ist, dass durch Einwirken der Schwerkraft die Zurröse alleine oder teilweise selbst mit montiertem, noch losem, Zurrmittel wieder eigenständig in die Ruheposition fällt und der Monteur zur korrekten Montage bereits eine Hand für das Fixieren der Zurröse nutzen muss. Das Spannen des Zurrmittels gestaltet sich dadurch ungleich schwieriger.

Aus der EP 3 059 119 A1 ist ferner ein Zurrpunkt bekannt, bei welchem eine Zurröse in einer Montagestellung durch einen auf der Rückseite der Zurröse angeordneten Stütznocken gehalten wird.

Aufgabe der vorliegenden Erfindung ist es, ausgehend vom Stand der Technik die Handhabung bei der Montage eines gattungsbildenden Zurrpunktes zu verbessern.

Die zuvor genannte Aufgabe wird erfindungsgemäß mit den Merkmalen im Anspruch 1 gelöst.

Vorteilhafte Ausgestaltungsvarianten sind Gegenstand der abhängigen Ansprüche.

Der Zurrpunkt wird an oder in einer Ladefläche eines Transportfahrzeuges angeordnet. Dies bedeutet, er kann beispielsweise in einen umlaufenden Rahmen der Ladefläche eingeschweißt werden. Er kann jedoch auch innerhalb der Ladefläche oder seitlich an der Ladefläche angebracht werden.

Der Zurrpunkt ist dazu geeignet, mit einem Zurrmittel gekoppelt zu werden. Hierzu weist der Zurrpunkt einen Ösenkörper auf, der relativ beweglich in einer Kassette gelagert ist. Der Ösenkörper kann von einer in der Kassette befindlichen Ruheposition in eine Montage- bzw. Gebrauchsposition gebracht werden. Hierzu wird der Ösenkörper aus der Kassette zumindest teilweise herausgezogen. In Einbauposition des Zurrpunktes an der Ladefläche ist dies im Wesentlichen in Vertikalrichtung. Die Kassette weist dazu in seitlich angeordneten Kulissenblechen eine Kulissenführung auf. Der Ösenkörper selbst weist seitlich über den Ösenkörper überstehende Arme auf, die in die Kulissenführung eingreifen und bei der Herausziehbewegung durch diese geführt sind. Die Kulissenführung begrenzt zugleich mit einem unteren Talbereich die Ruheposition. Die Kulissenführung begrenzt weiterhin mit einem oberen Talbereich die Gebrauchsposition.

Im Sinne der Erfindung ist unter Montagestellung bzw. Montageposition eine Position des Ösenkörpers zu verstehen, sodass dieser mit einem Zurrmittel gekoppelt werden kann. Unter Montageposition ist somit nicht eine Erstmontage bzw. ein Einbau von Zurrösen bzw. Kassette in die Ladefläche zu verstehen. Die Gebrauchsposition ist dann die Position, die die Zurröse einnimmt, wenn diese mit einer Zurrkraft beaufschlagt ist. Insbesondere kommen die Arme der Zurröse als Widerlager in der Kulisse zur Anlage.

Damit nunmehr die Handhabung verbessert ist, ist erfindungsgemäß vorgesehen, dass in einem oberen Teil der Kulissenführung der Kassette ein in die Kulissenführung hereinragender Vorsprung angeordnet ist, dergestalt, dass der Ösenkörper in einer Montageposition durch Anlage der Arme an einem jeweiligen Vorsprung gehalten bzw. abgestützt wird. Die Erfindung sieht somit vor, dass in der Kulissenführung ein in die Kulissenführung selbst hineinragender Vorsprung angeordnet ist. Der Vorsprung kann auch als Nase oder Nocken bezeichnet werden. In einer Montageposition ist es somit möglich, dass der Ösenkörper durch einen formschlüssigen Eingriff bzw. Anlagenkontakt eines Teils eines Armes an dem Vorsprung gehalten ist. Erst wenn das Zurrmittel mit dem Ösenkörper verbunden ist und durch eine Zugkraft in die Zurrrichtung gezogen wird, wird die Montageposition verlassen und die gekrümmten Flächen der Arme kommen mit den Seitenwangen in Kontakt und übertragen die Zurrkräfte von der Zurröse in die Kassette. Dieses ist dann die Gebrauchsposition.

Der Vorsprung selbst ist bezogen auf einen Längsschnitt in Einbauposition von unten kommend zunehmend ausgebildet. Diese Zunahme kann progressiv, linear oder degressiv ausgebildet sein. Dies bietet insbesondere den Vorteil, dass bei Herausziehen des Ösenkörpers aus der Ruheposition in die Montage- oder Gebrauchsposition die Arme über den Vorsprung gleiten, ohne zu verhaken. In einem oberen Abschnitt besitzt dann der Vorsprung einen Absatz. Hierdurch ist es wiederum möglich, den Ösenkörper auf die Vertikalrichtung bezogen oben auf dem Vorsprung formschlüssig abzulegen.

Die Kulissenführung selbst ist als längliche Ausnehmung in einem jeweils seitlichen Kulissenblech angeordnet. Der gesamte Zurrpunkt kann als Einschweißbauteil hergestellt sein. Hierzu sind zwei parallel gegenüberliegende Kulissenbleche über ein hinteres Querblech miteinander verbunden und der Ösenkörper ist in dieses Bauteil - auch Kassette genannt - eingesetzt. In einem bezogen auf die Einbauposition unteren Bereich ist somit der Ösenkörper in einer Ruheposition versenkt gelagert. Wird der Ösenkörper auf die Vertikalrichtung bezogen aus der Kassette herausgezogen, so gleiten die Arme in der Kulissenführung. Der Ösenkörper wird nunmehr bevorzugt durch einen anwendenden Monteur, bezogen auf die Ladefläche zur Ladefläche hin orientiert, angeordnet. Insbesondere weist der Zurrpunkt in der Montagestellung einen Winkel von 20° bis 40°, insbesondere 25° bis 35°, besonders bevorzugt von ca. 30° zu der Ladefläche auf. Hierbei liegt ein jeweiliger Arm des Ösenkörpers auf einem Vorsprung in einer jeweiligen Kulissenführung. Der Vorsprung ist in der Kulissenführung selbst in Richtung zu dem Transportfahrzeug orientiert zeigend angeordnet. In Gebrauchsposition des Ösenkörpers kommt der Vorsprung nicht mit den Armen in Kontakt.

Ein jeweiliger Arm des Ösenkörpers weist selbst einen Querschnitt auf, der bevorzugt aus zwei gegenüberliegenden gekrümmten Seiten sowie zwei gegenüberliegenden geraden Seiten ausgebildet ist. Nunmehr weist im Querschnitt jeweils eine Ecke, die an dem Vorsprung zur Anlage kommt, eine im Vergleich zu den anderen Ecken des Armes stärker eckig geformte Kontur an dem Übergang von gerader Seite zu gekrümmter Seite auf. Hierzu ist insbesondere eine Krümmung bzw. ein Krümmungsabschnitt zu der Ecke verlaufend selbst geringer ausgebildet sowie eine gerade Seite entsprechend länger ausgebildet. Diese Ecke des Armes kommt somit in der Montageposition auf dem Vorsprung zur Ablage bzw. zur Anlage. Der äußerste Teil der Ecke selbst ist bevorzugt jedoch weiterhin abgerundet, so dass ein Verbringen aus der Montageposition in eine Gebrauchsposition oder auch Ruhestellung ermöglicht ist, ohne dass der Arm in der Kulissenführung verhakt.

Die Kulissenführung selbst ist insbesondere in einem oberen Teil nach außen gerichtet gekrümmt, mithin von der Ladefläche wegzeigend orientiert. Die Kulissenführung weist weiterhin eine Breite, insbesondere in einem oberen Bereich, hinter dem Vorsprung auf, die größer ist als der Abstand zwischen den gekrümmten Seiten des Armes im Querschnitt. Insbesondere ist jedoch diese Breite nur soweit geringfügig größer, dass durch Verschwenken der Zurröse über den gesamten Winkelbereich der möglichen Gebrauchspositionen die Arme nicht mit den Vorsprüngen kollidieren. Insbesondere ist der Bereich somit größer als das einfache des größten Abstandes der gekrümmten Seiten, jedoch bevorzugt kleiner als das 1,2-fache des Abstands insbesondere kleiner als das 1,1-fache.

Die Kulissenbleche selbst sind bevorzugt aus einem Stahlwerkstoff ausgelasert. Dann ist der Vorsprung einstückig und werkstoffeinheitlich mit dem Kulissenblech ausgebildet. Es ist im Sinne der Erfindung jedoch auch vorstellbar, dass der Vorsprung selbst als externes Bauteil in das Kulissenblech eingebracht wird. Beispielsweise kann ein Vorsprung aufgeklebt werden oder auch formschlüssig befestigt werden. Auch wäre es vorstellbar, dass ein Vorsprung als externes Bauteil, beispielsweise als einzutreibender Stift oder Bolzen in das Kulissenblech eingebracht wird und somit dann in die Kulissenführung hin vorsteht. Auch kann ein Vorsprung angeschweißt werden.

Weitere Vorteile, Merkmale, Eigenschaften und Aspekte der vorliegenden Erfindung sind Gegenstand der nachfolgenden Beschreibung. Diese dienen dem einfacheren Verständnis der Erfindung. Es zeigen:
- Figuren 1 und 2: einen erfindungsgemäßen Zurrpunkt in Ruheposition sowie in Montageposition,
- Figur 3: eine Längsschnittansicht durch ein Kulissenblech,
- Figur 4: den Zurrpunkt in Seitenansicht in Ruheposition,
- Figur 5a) bis d): eine Seitenansicht auf den erfindungsgemäßen Zurrpunkt in verschiedenen Gebrauchspositionenstellungen bzw. Ruhestellung und
- Figur 6a) bis d): eine jeweilige Detailansicht der Arme in der Kulissenführung.

In den Figuren werden für gleiche oder ähnliche Bauteile dieselben Bezugszeichen verwendet, auch wenn eine wiederholte Beschreibung aus Vereinfachungsgründen entfällt.

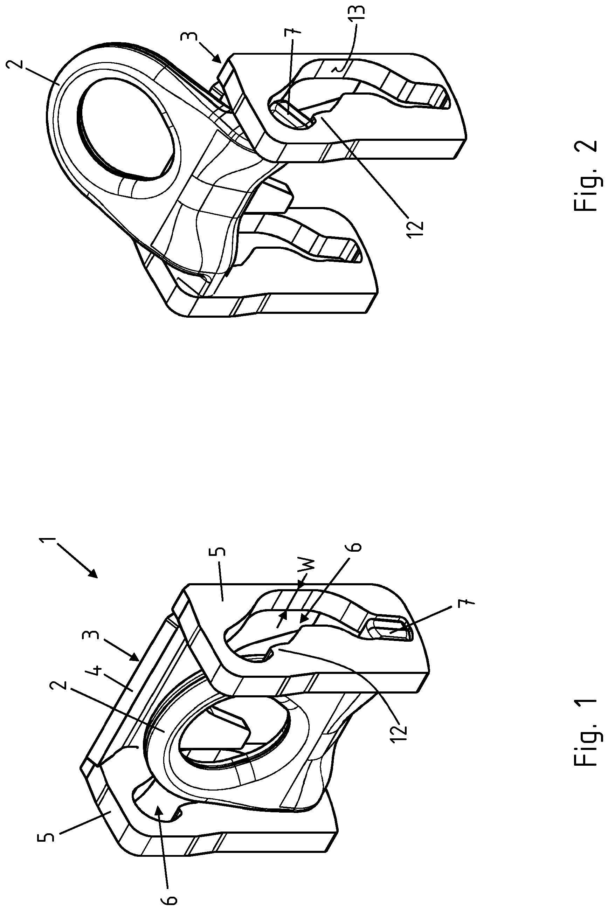

Figur 1 zeigt einen erfindungsgemäßen Zurrpunkt 1 in Ruheposition. Hierzu ist ein Ösenkörper 2 in einer Kassette 3 vertieft gelagert. Die Kassette 3 selbst weist ein Querblech 4 sowie zwei seitliche Kulissenbleche 5 auf. In jedem Kulissenblech 5 ist eine Kulissenführung 6 ausgebildet. Der Ösenkörper 2 selber weist seitlich abstehende Arme 7 auf, wobei die Arme 7 in die Kulissenführung 6 eingreifen und in dieser geführt werden.

In Figur 2 dargestellt ist der Ösenkörper 2 in einer Montageposition aus der Kassette 3 herausgezogen. Die Arme 7 befinden sich somit in einem oberen Teil der Kulissenführung 6.

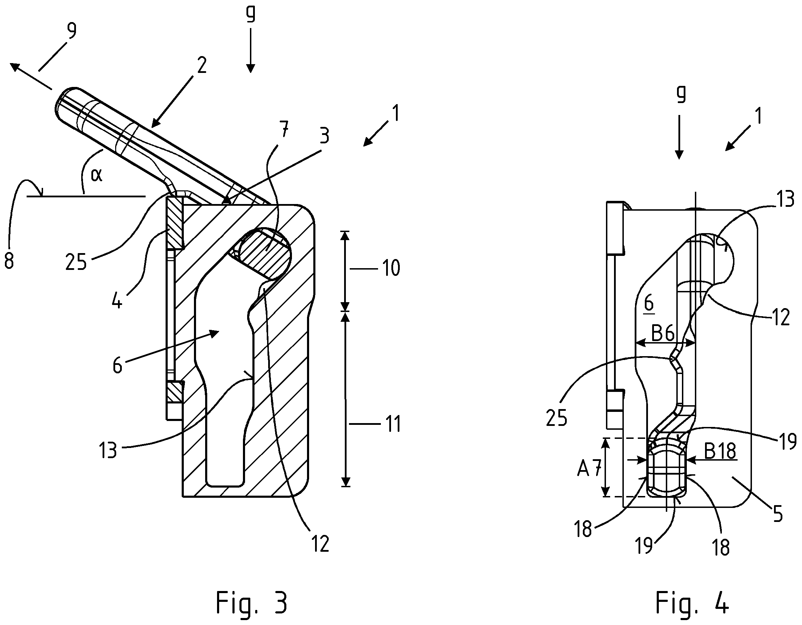

In Figur 3 dargestellt ist eine seitliche Schnittansicht durch ein Kulissenblech 5 auf den erfindungsgemäßen Zurrpunkt 1 in Montageposition. Es handelt sich gemäß der Seitenansichten von Figur 3 und Figur 4 um eine ergänzende Ausführungsvariante, bei der das Querblech 4 nicht, wie in Figur 1 und 2 dargestellt, abgebogen ist, sondern gerade ausgeführt ist. Zusätzlich kann optional an dem Ösenkörper 2 ein Stütznocken 25 oder mehrere Stütznocken angeordnet sein. Dieser Stütznocken 25 muss jedoch nicht ausgebildet sein. Der Ösenkörper 2 ist aus der Kassette 3 herausgezogen und in einem Winkel α zu einer möglichen Ladefläche 8 in Zurrrichtung 9 orientiert angeordnet. Die Kulissenführung 6 weist einen oberen Teil 10 auf, der zu einem unteren Teil 11 der Kulissenführung 6 abgewinkelt bzw. abgeknickt verläuft. Der obere Teil 10 der Kulissenführung 6 ist in zu der Zurrrichtung 9 entgegengesetzter Richtung abgewinkelt. Somit kann der Ösenkörper 2 wie dargestellt, unter dem Winkel α abgelegt bzw. gehalten werden.

Erfindungsgemäß ist nunmehr vorgesehen, dass in der Kulissenführung 6 ein Vorsprung 12 angeordnet ist. Dieser Vorsprung 12 zeigt in die Kulissenführung 6 hinein bzw. steht gegenüber einer Seitenwange 13 in Richtung der Kulissenführung 6 über. Der Vorsprung 12 ist auf der der Ladefläche 8 gegenüberliegenden Seite des Kulissenbleches 5 angeordnet und zu der Ladefläche 8 hin orientiert zeigend. Der Arm 7 des Ösenkörpers 2 liegt dabei auf dem Vorsprung 12 auf. Aufgrund der Erdanziehungskraft g wird der Ösenkörper 2 mit seinem Arm 7 gegen den Vorsprung 12 gedrückt, so dass der Ösenkörper 2 in der hier dargestellten Montageposition gehalten ist. Der Winkel α beträgt bevorzugt zwischen 20° und 40°, insbesondere 25° und 35° und ganz besonders bevorzugt etwa 30° zur Ladefläche 8.

Der Vorsprung 12 selbst erstreckt sich bevorzugt über die gesamte Wandstärke W des Kulissenbleches 5, wie in Figur 1 dargestellt. Der Vorsprung 12 kann sich jedoch auch nur über einen Teil der Wandstärke W erstrecken.

Figur 4 zeigt den erfindungsgemäßen Zurrpunkt 1 in einer Seitenansicht in Ruheposition.

Der Ösenkörper 2 weist insbesondere auf jeder Seite einen abstehenden Arm 7 auf, wobei in jedem Kulissenblech 5 in der Kulissenführung 6 ein Vorsprung 12 angeordnet ist.

Die Kulissenführung 6 selbst weist, wie in Figur 4 dargestellt, im unteren Teil 11 eine Breite B18 auf, die geringfügig größer ist als der Abstand von gegenüberliegenden parallelen geraden Seiten 18 des Armes 7. Im mittleren und einem oberen Teil 10 weist die Kulissenführung 6 eine Breite B6 auf, die im Wesentlichen größer ist als ein Abstand A7 von den gegenüberliegenden abgerundeten bzw. gekrümmten Seiten 19 der Arme 7. Somit kann der Ösenkörper 2, respektive die Arme 7, eine Schwenkbewegung in diesem Teil der Kulissenführung 6 vornehmen, sodass eine Montage des Ösenkörpers 2 in die bereits zur Kassette verschweißten Kulissenbleche 7 und Querblech 4 ermöglicht wird.

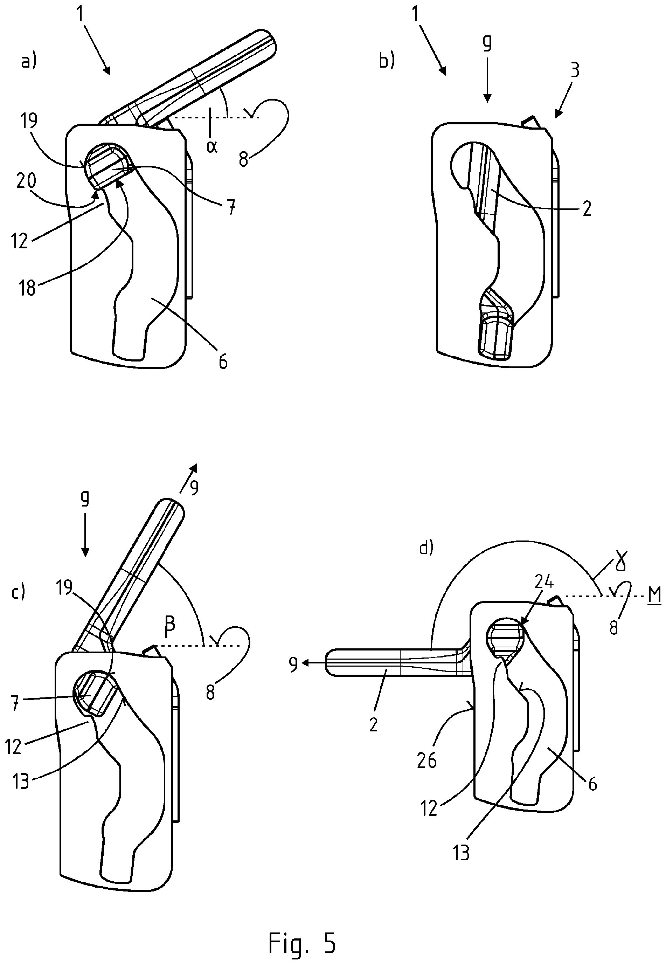

Figur 5 a) zeigt die Montageposition, wie auch dargestellt in Figur 3, in einem Winkel α zu einer angedeuteten Ladefläche 8. Hierbei ist eine Ecke 20 des Armes in ihrer Querschnittskontur derart ausgestaltet, dass die gekrümmte Seite 19 weniger stark gekrümmt ist und die gerade Seite 18 länger ausgebildet ist. Somit kommt die Ecke 20 formschlüssig auf dem Vorsprung 12 zur Anlage.

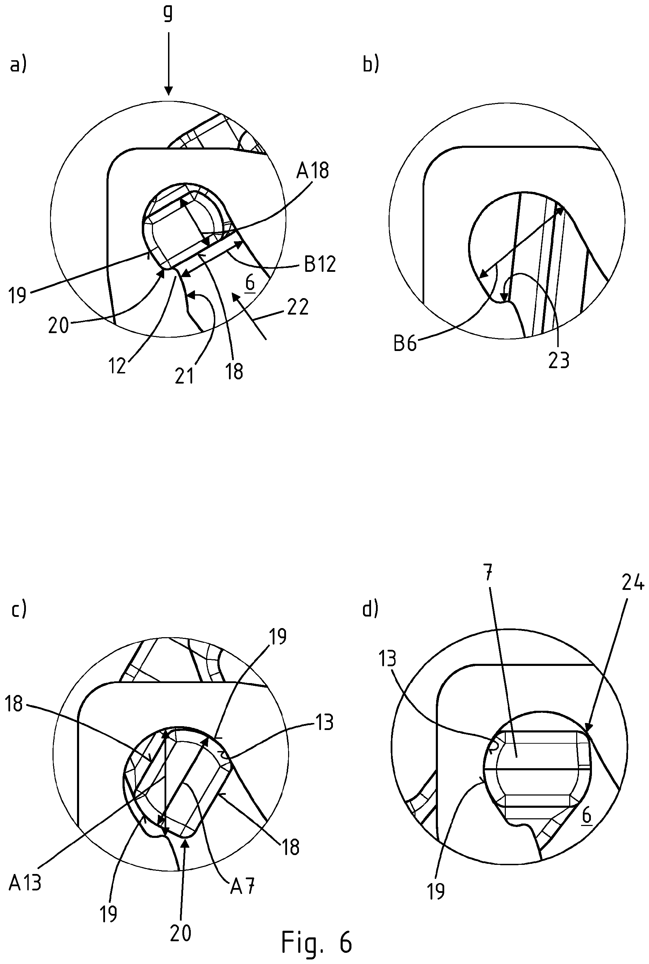

Dargestellt in Figur 6 a) ist, dass der Vorsprung 12, auf die Einbauposition bezogen von unten kommend, zunächst einen zunehmenden Abschnitt 21 aufweist. Dieser kann linear, degressiv oder progressiv gegenüber der Seitenwange 13 zunehmend ausgebildet sein. Dies bietet den Vorteil, dass in Herausziehrichtung 22 der Teil des Armes 7 über den Vorsprung 12 gleiten kann, ohne dass für den anwendenden Monteur ein Verhaken spürbar ist. In der in Figuren 5 a) und 6 a) gezeigten Montageposition liegt dann eine Ecke 20 des Armes 7 im Querschnitt formschlüssig in einem oberen Abschnitt des Vorsprungs 12, der als Absatz 23 ausgebildet ist, an. Der Ösenkörper 2 ist folglich aufgrund der Einwirkung der Erdanziehungskraft g formschlüssig lagefixiert an dem Vorsprung 12 gehalten.

Hierzu ist insbesondere eine Breite B6 der Kulissenführung 6 größer als der Abstand A7 der gekrümmten Seiten zueinander. Im Bereich des Vorsprunges 12 selber ist eine Breite B12 der Kulissenführung 6 bevorzugt kleiner als der Abstand A7 der gekrümmten Seiten zueinander. Die Breite B12 ist jedoch größer als der Abstand A18 der geraden Seiten 18 zueinander.

Der äußerste Punkt bzw. die äußerste Ecke des Vorsprungs 12 selbst ist wiederum abgerundet ausgebildet, genauso wie die Ecke 20 selbst ebenfalls abgerundet ausgebildet ist. Eine Handhabung des Ösenkörpers 2, ohne dass es zu einem spürbaren Verhaken kommt, wird dadurch realisiert.

Figur 5 b) und 6 b) zeigen den erfindungsgemäßen Zurrpunkt 1 in einer Ruheposition. Der Ösenkörper 2 ist vollständig in die Kassette 3 eingeführt und in einem unteren Teil der Kulissenführung 6 formschlüssig und lagefixiert gehalten, insbesondere aufgrund der Erdanziehungskraft g.

Figur 5 c) zeigt eine Gebrauchsposition in einem Winkel β zur Ladefläche 8. Der von dem Angriffspunkt des Zurrmittels an der Last abhängige Winkel β beträgt bevorzugt 30° bis 90°, zur Ladefläche 8, so dass der Ösenkörper 2 in Zurrrichtung 9 orientiert ist. Der obere Teil der gekrümmten Seite 19 des Armes 7 liegt dabei formschlüssig an einer oberen Seitenwange 13 der Kulissenführung 6 an. Die jeweiligen Querschnittskonturen von gekrümmter Seite 19 und Seitenwange 13 der Kulissenführung 6 im oberen Bereich sind aufeinander abgestimmt, insbesondere komplementär ausgebildet. Diese können kreisabschnittsförmig ausgebildet sein, jedoch auch mit einem anderen Krümmungsradius. Der Abstand A13 von oberstem Punkt in der Seitenwange 13 in der Kulissenführung 6 bis zum Vorsprung 12 ist insbesondere größer als der Abstand A7 der gekrümmten Seiten 19 zueinander.

Somit ist es möglich, in einer Gebrauchsposition, dargestellt in Figur 5 c) und 6 c), den unter Belastung nach oben entgegen der Erdanziehungskraft g gezogenen Arm 7 des Ösenkörpers 2 über den Vorsprung 12 hinweg zu schwenken.

Figur 5 d) und 6 d) zeigen eine weitere Gebrauchsposition für eine über die Ladeflächenbegrenzung 26 seitlich überstehende Last, in welcher der Ösenkörper 2 nach außen geschwenkt ist, in einer 180°-Stellung zur Ladefläche 8. Der Winkel γ, der sich bei Belastung des angeschlossenen Zurrmittels einstellt, beträgt folglich bevorzugt 180°. Bei Beaufschlagung mit einer Kraft in Zurrrichtung 9 schmiegen sich somit die Flächen der gekrümmten Seite 19 an die Seitenwange 13 der Kulissenführung an.

Ferner ist in Figur 5 d) noch die Mitte M des Transportfahrzeuges dargestellt. Hier ist zu erkennen, dass der Vorsprung 12 in einem von der Mitte M abgewandten Teil der Seitenwange 13 angeordnet ist. Der Vorsprung 12 selbst ist dann wiederum in Richtung zur Mitte M orientiert.

### Bezugszeichen:

- 1 -: Zurrpunkt
- 2 -: Ösenkörper
- 3 -: Kassette
- 4 -: Querblech
- 5 -: Kulissenblech
- 6 -: Kulissenführung
- 7 -: Arm zu 2
- 8 -: Ladefläche
- 9 -: Zurrrichtung
- 10 -: oberer Teil zu 6
- 11 -: unterer Teil zu 6
- 12 -: Vorsprung
- 13 -: Seitenwange
- 18 -: gerade Seite zu 7
- 19 -: gekrümmte Seite zu 7
- 20 -: Ecke
- 21 -: zunehmender Abschnitt
- 22 -: Herausziehrichtung
- 23 -: Absatz
- 24 -: Ecke
- 25 -: Stütznocken
- 26 -: Ladeflächenbegrenzung

- g -: Erdanziehungskraft
- α -: Winkel
- β -: Winkel
- γ -: Winkel
- B18 -: Breite zu 18
- B6 -: Breite zu 6
- B12 -: Breite zu 12
- A7 -: Abstand zu 7
- A13 -: Abstand zu 13
- A18 -: Abstand zu 18
- M -: Mitte
- W-: Wandstärke

## Patentansprüche

1. Zurrpunkt (1) an einer Ladefläche (8) eines Transportfahrzeuges, wobei der Zurrpunkt (1) mit einem Zurrmittel gekoppelt wird, indem ein Ösenkörper (2) relativ beweglich in einer Kassette (3) gelagert ist und von einer in der Kassette (3) befindlichen Ruheposition in eine Montage- oder Gebrauchsposition herausziehbar ist, wobei die Kassette (3) in seitlich angeordneten Kulissenblechen (5) eine Kulissenführung (6) aufweist und der Ösenkörper (2) seitlich überstehende Arme (7) aufweist, die in die Kulissenführung (6) eingreifen, **dadurch gekennzeichnet, dass** für die Montageposition in einem oberen Teil der Kulissenführung (6) der Kassette (3) ein in die Kulissenführung (6) hineinragender Vorsprung (12) angeordnet ist, wobei der Vorsprung (12) in einem Längsschnitt von unten kommend zunehmend ausgebildet ist und in einem oberen Abschnitt einen Absatz (23) aufweist, dergestalt, dass der Ösenkörper (2) durch Anlage der Arme (7) an einem jeweiligen Vorsprung (12) gehalten ist.

2. Zurrpunkt (1) nach Anspruch 1, **dadurch gekennzeichnet, dass** die Kulissenführung (6) in Form einer länglichen Ausnehmung ausgebildet ist.

3. Zurrpunkt (1) nach Anspruch 1 oder 2, **dadurch gekennzeichnet, dass** in jeder Kulissenführung (6) ein Vorsprung (12) angeordnet ist.

4. Zurrpunkt (1) nach einem der Ansprüche 1 bis 3, **dadurch gekennzeichnet, dass** der Vorsprung (12) in einem von der Mitte (M) des Transportfahrzeuges abgewandten Teil einer umlaufenden Seitenwange (13) der Kulissenführung (6) angeordnet ist.

5. Zurrpunkt (1) nach dem vorhergehenden Anspruch, **dadurch gekennzeichnet, dass** der Vorsprung (12) in Richtung zur Mitte (M) des Transportfahrzeuges orientiert ist.

6. Zurrpunkt (1) nach einem der Ansprüche 1 bis 5, **dadurch gekennzeichnet, dass** die Kulissenführung (6), auf die Einbauposition bezogen, einen oberen Teil (10) aufweist, welcher gegenüber einem unteren Teil (11) abgewinkelt verlaufend ausgebildet ist.

7. Zurrpunkt (1) nach einem der Ansprüche 1 bis 6, **dadurch gekennzeichnet, dass** der Arm (7) des Ösenkörpers (2) einen Querschnitt aus zwei gekrümmten Seiten (19) und zwei geraden Seiten (18) aufweist, wobei eine an dem Vorsprung (12) zur Anlage kommende Ecke (20) des Querschnittes des Armes (7) eine im Vergleich zu den anderen Ecken (24) nach außen gerichtete eckigere Kontur aufweist, insbesondere sind eine Krümmung bzw. Krümmungsabschnitt der gekrümmten Seite (19) zu der Ecke (24) verlaufend geringer ausgebildet und eine gerade Seite (18) länger ausgebildet.

8. Zurrpunkt (1) nach einem der Ansprüche 1 bis 7, **dadurch gekennzeichnet, dass** der Ösenkörper (2) in einem Winkel α von 20 bis 40°, insbesondere 25 bis 35°, besonders bevorzugt von 30° zu der Ladefläche (8) in einer Montageposition arretierbar ist, wobei eine Ecke (24) eines jeweiligen Armes (7) auf dem Vorsprung (12) zur Auflage kommt.

9. Zurrpunkt (1) nach Anspruch 7, **dadurch gekennzeichnet, dass** eine Breite (B6) der Kulissenführung (6) in einem oberen Bereich hinter dem Vorsprung (12) größer ist, als der Abstand (A7) zwischen den gekrümmten Seiten (19) des Armes (7) im Querschnitt.

## Claims

1. Lashing point (1) on a loading surface (8) of a transport vehicle, wherein the lashing point (1) is coupled to a lashing means, by an eyelet body (2) being mounted so as to be relatively movable in a cassette (3) and able to be drawn out from a rest position located in the cassette (3) into an assembly or use position, wherein the cassette (3) has a link guide (6) in laterally arranged slotted guide plates (5) and the eyelet body (2) has laterally projecting arms (7) which engage in the link guide (6), **characterised in that**, for the assembly position, a projection (12) projecting into the link guide (6) is arranged in an upper part of the link guide (6) of the cassette (3), wherein the projection (12) increases in longitudinal section from below and in an upper portion has a shoulder (23), in such a way that the eyelet body (2) is held by the arms (7) bearing against a respective projection (12).

2. Lashing point (1) according to claim 1, **characterised in that** the link guide (6) is in the form of an elongate recess.

3. Lashing point (1) according to claim 1 or 2, **characterised in that** a projection (12) is arranged in each link guide (6).

4. Lashing point (1) according to any one of claims 1 to 3, **characterised in that** the projection (12) is arranged in a part of a circumferential side cheek (13) of the link guide (6) that faces away from the centre (M) of the transport vehicle.

5. Lashing point (1) according to the preceding claim, **characterised in that** the projection (12) is oriented towards the centre (M) of the transport vehicle.

6. Lashing point (1) according to any one of claims 1 to 5, **characterised in that** the link guide (6) has, with reference to the installation position, an upper part (10) which is configured to extend at an angle to a lower part (11).

7. Lashing point (1) according to any one of claims 1 to 6, **characterised in that** the arm (7) of the eyelet body (2) has a cross-section consisting of two curved sides (19) and two straight sides (18), wherein a corner (20) of the cross-section of the arm (7) which comes to bear on the projection (12) has in comparison with the other corners (24) a more angular outwardly directed contour, in particular a curvature or curvature section of the curved side (19) extending towards the corner (24) is configured to be smaller and a straight side (18) is configured to be longer.

8. Lashing point (1) according to any one of claims 1 to 7, **characterised in that** the eyelet body (2) can be locked in an assembly position at an angle α of 20 to 40°, in particular 25 to 35°, particularly preferably 30° to the loading surface (8), wherein a corner (24) of a respective arm (7) bears on the projection (12).

9. Lashing point (1) according to claim 7, **characterised in that** a width (B6) of the link guide (6) in an upper region behind the projection (12) is greater than the distance (A7) between the curved sides (19) of the arm (7) in cross-section.

## Revendications

1. Point d'arrimage (1) sur une surface de chargement (8) d'un véhicule de transport, dans lequel le point d'arrimage (1) est couplé à un moyen d'arrimage, en ce qu'un corps d'œillet (2) est monté de manière relativement mobile dans une cassette (3) et est extractible d'une position de repos située dans la cassette (3) vers une position de montage ou d'utilisation, dans lequel la cassette (3) présente un guidage coulissant (6) dans des plaques à coulisse (5) disposées latéralement et le corps d'œillet (2) présente des bras (7) faisant saillie latéralement, qui s'enclenchent dans le guidage coulissant (6), **caractérisé en ce que**, pour la position de montage, une saillie (12) faisant saillie dans le guidage coulissant (6) est disposée dans une partie supérieure du guidage coulissant (6) de la cassette (3), dans lequel la saillie (12) est conçue de forme croissante dans une section longitudinale venant du bas et présente un épaulement (23) dans une section supérieure, de sorte que le corps d'œillet (2) est maintenu par les bras (7) s'appuyant contre une saillie (12) respective.

2. Point d'arrimage (1) selon la revendication 1, **caractérisé en ce que** le guidage coulissant (6) est conçu sous la forme d'un évidement oblong.

3. Point d'arrimage (1) selon la revendication 1 ou 2, **caractérisé en ce qu'**une saillie (12) est disposée dans chaque guidage coulissant (6).

4. Point d'arrimage (1) selon l'une quelconque des revendications 1 à 3, **caractérisé en ce que** la saillie (12) est disposée dans une partie d'une joue latérale périphérique (13) du guidage coulissant (6) opposée au centre (M) du véhicule de transport.

5. Point d'arrimage (1) selon la revendication précédente, **caractérisé en ce que** la saillie (12) est orientée en direction du centre (M) du véhicule de transport.

6. Point d'arrimage (1) selon l'une quelconque des revendications 1 à 5, **caractérisé en ce que** le guidage coulissant (6) présente, par rapport à la position de montage, une partie supérieure (10), laquelle est conçue pour s'étendre en angle par rapport à une partie inférieure (11).

7. Point d'arrimage (1) selon l'une quelconque des revendications 1 à 6, **caractérisé en ce que** le bras (7) du corps d'œillet (2) présente une section transversale constituée de deux côtés courbes (19) et de deux côtés droits (18), dans lequel un coin (20) de la section transversale du bras (7) s'appuyant contre la saillie (12) présente un contour plus anguleux dirigé vers l'extérieur par rapport aux autres coins (24), en particulier une courbure ou une section de courbure du côté courbe (19) allant vers le coin (24) est conçue de manière plus petite et un côté droit (18) est conçu de manière plus longue.

8. Point d'arrimage (1) selon l'une quelconque des revendications 1 à 7, **caractérisé en ce que** le corps d'œillet (2) peut être bloqué dans une position de montage sous un angle α de 20 à 40°, en particulier de 25 à 35°, le plus préférentiellement de 30° par rapport à la surface de chargement (8), dans lequel un coin (24) d'un bras respectif (7) s'appuie contre la saillie (12).

9. Point d'arrimage (1) selon la revendication 7, **caractérisé en ce qu'**une largeur (B6) du guidage coulissant (6) dans une zone supérieure derrière la saillie (12) est supérieure à la distance (A7) entre les côtés courbes (19) du bras (7) en section transversale.
